# EUROPEAN PATENT APPLICATION

(11) **EP 4 725 763 A1**
(43) Date of publication of application: **15.04.2026**
(21) Application number: 24306678.4
(22) Date of filing: 11.10.2024
(51) Int. Cl.: B60P 3/40, B66F 9/06, B63B 73/30

(54) **INSTALLATION FOR THE LOAD-OUT INTO THE WATER OF A HEAVY LOAD**

(71) Applicant: Soletanche Freyssinet, 92500 Rueil Malmaison (FR); Roll Holding B.V., 2909 VA Capelle aan den Ijssel (NL)
(72) Inventor: MELEN, Benoit, 92500 RUEIL MALMAISON (FR); WESEL, Roel, 2909 VA Capelle aan den ljssel (NL)
(74) Representative: Ipsilon

(57) **Abstract**

Method for the load-out into water of a heavy load (10), comprising:
a) providing at least one onshore lifter (20) comprising:
- a main longitudinal structure (21),
- lifting means (50) at the front of said main longitudinal structure (21),
- a counterweight (60) at the rear of said main longitudinal structure (21),
- front (40) and rear (30) bases respectively at the front and the rear of said main longitudinal structure (21),
- legs (39, 43) allowing the lifter (20) to rest on the ground at a height allowing wheel transporters (100) to position themselves at least partially under the front and rear bases for future transportation of the lifter,
- the front (40) and rear (30) bases being configured for resting on said wheel transporters (100) during transportation of the lifter with said wheel transporters (100),

b) providing at least one offshore lifter (200) comprising lifting means (220),
c) using wheel transporters (100) for approaching the at least one onshore lifter (20) close to the load (10),
d) connecting the lifting means (50) of the at least one onshore lifter (20) and of the at least one offshore lifter (200) to the load (10),
e) moving the at least one onshore lifter (20) using wheel transporters (100) and the at least one offshore lifter (200) to transport the load (10) from an onshore area over the water in a load-out area while hoisting it,
f) lowering the load into water.

## Description

### Technical field

The present invention relates to the load-out into the water of a heavy load, and more specifically, but not exclusively, that of a heavy load constituted by a float for an offshore wind turbine.

### Prior art

The development of offshore wind turbines is accompanied by an increase in the power and size thereof.

It is presently commonplace to install floating wind turbines at sea, said wind turbines having a tower borne by a float that can be wholly or partially submerged.

Wind turbines having tripod or tetrapod floats, with the tower resting on one of the feet of the float or in the center, have thus been developed.

Such floats may be made from metal or concrete and have significant weight and bulk, for example 4000 t or more.

They are generally manufactured on land and loaded out into the water using harbor installations adapted to transport them and load them out into the water. These adapted harbor installations, which have handling means for heavy loads, can be located far away from the wind farm, thereby making transport to the site lengthy and expensive.

It is possible that the harbor installations closest to the wind farm cannot be adapted, because they are too small, lack adequate handling means, or require considerable infrastructure work that is not necessarily profitable if said harbor installations are used only once for the installation of the farm for the completed wind turbine.

CN 103693170 discloses an offshore platform for the assembling of wind turbine structures. The platform is relatively large and the assembling of the structure offshore raises some difficulties as there is limited space available on the platform and is less convenient than onshore.

WO2023/088788 discloses several installations for the load-out into the water of a heavy load.

Consequently, there is a need to benefit from a system facilitating the load-out into the water of heavy loads such as structures having a non-negligible height, avoiding the use of heavy harbour installations and minimizing civil engineering works on the loading platform (wharf).

### Summary of the invention

The invention achieves this objective by proposing a method for the load out into the water of a heavy load, comprising:
a) providing at least one onshore lifter comprising:
   - a main longitudinal structure,
   - lifting means at the front of said main longitudinal structure,
   - a counterweight at the rear of said main longitudinal structure,
   - front and rear bases respectively at the front and the rear of said main longitudinal structure,
   - legs allowing the lifter to rest on the ground at a height allowing wheel transporters to position themselves at least partially under the front and rear bases for future transportation of the lifter,
   - the front and rear bases being configured for resting on said wheel transporters during transportation of the lifter with said wheel transporters,
b) providing at least one offshore lifter comprising lifting means,
c) using wheel transporters for approaching the at least one onshore lifter close to the load,
d) connecting the lifting means of the at least one onshore lifter and of the at least one offshore lifter to the load,
e) moving the at least one onshore lifter using wheel transporters and the at least one offshore lifter to transport the load from an onshore area over the water while hoisting it,
f) lowering the load into water.

A "heavy load" is understood to mean a load with a weight typically greater than or equal to 1000 t, better still 3000 t, or even 4000 t, while still being less than 15000 t or more, for example 50 000 t.

Step b) may be performed before or after step c).

The invention enables to avoid installing specific tracks on the platform and corresponding civil engineering works for reinforcing the harbour structures.

The invention thus makes it possible to solve the problem of expensive investments in harbor civil engineering work for transferring wind turbine floats from the construction/assembly dock to their load-out area.

The invention makes it possible to avoid the use of large-capacity handling means, which would have a higher carbon footprint.

The method preferably comprises bringing the load close to the load out area using wheel transporters.

Preferably, at least one same wheel transporter is used for transporting the load onshore close to load-out area and then being moved away from under the load and again used at steps c) and e) for transporting the at least one onshore lifter. Preferably, at least two, three, four or more wheel transporters are so re-used. This minimizes the number of wheel transporters used.

Preferably, the front base comprises at least one transverse beam, under which at least one wheel transporter is positioned during steps c) and e). This at least one transverse beam allows the mechanical load exerted during lifting of the load to be distributed on a larger surface of the wheel transporters and of the loading platform (wharf), with an increased stability.

Preferably, the at least one onshore lifter comprises spaced apart legs at ends of said at least one transverse beam between which at least one of said wheel transporters is to be positioned. Such legs facilitate the positioning of the wheel transporters under the front base.

Preferably, said spaced apart legs are connected by end beams extending parallel to the main longitudinal structure. Such end beams can bear on the wheel transporter(s) positioned under the front base. Because of the distance of the end beams to the main longitudinal structure, an increased stability of the at least one onshore lifter is achieved.

Preferably, the front base comprises intermediate beams spaced along said at least one transverse beam between the end beams for resting on at least one of said wheel transporters during transportation the at least one lifter. Such intermediate beams help distribute the mechanical load on at least one wheel transporter positioned under the front base and on the loading platform (wharf).

Preferably, the spaced apart legs allow two wheel transporters to stay one next to the other under the front base at least during step e). This enables to increase the surface that bears the mechanical load, thus allowing a lighter structure for the at least one transverse beam.

Preferably, the front base comprises at least one transverse beam, under which at least one wheel transporter is positioned during steps c) and e).

Preferably, the at least one onshore lifter comprising spaced apart legs at ends of said at least one transverse beam between which at least one of said wheel transporters is to be positioned.

Preferably, said spaced apart legs are connected by end beams extending parallel to the main longitudinal structure.

Preferably, the rear base comprises intermediate beams spaced along said at least one transverse beam between the end beams for resting on at least one of said wheel transporters during transportation of the at least one lifter.

Preferably, the end beams of the rear base are closer to the longitudinal axis of said main longitudinal structure than the end beams of the front base.

Preferably, the front and rear bases are connected by bracing, preferably two crossing diagonal struts.

Preferably, the front base and/or the rear base each comprising two pairs of transverse beams, the beams of each pair being closer to each other than the adjacent beams of the two different pairs. This allows each pair of transverse beams to bear in a centred manner on a respective wheel transporter, which improves the stability and mechanical load distribution.

The load may be a tripod or a quadripod, inter alia.

Two of said onshore lifters may be used simultaneously at least during step e).

The offshore lifter preferably comprises a barge having a ballast system for varying the height and tilt angle (or inclination) of said barge relative to the water level, the method comprising controlling the ballast system during lifting and/or lowering of the load into water.

Preferably, the wheel transporters are SPMTs. SPMT have a deck of variable height and multidirectional wheels.

A further object of the present invention is a lifter for carrying a load, in particular for being used in a method as defined above, comprising:
- A main longitudinal structure,
- lifting means at the front of said main longitudinal structure,
- a counterweight at the rear of said main longitudinal structure,
- front and rear bases respectively at the front and the rear of said main longitudinal structure,
- legs allowing the lifter to rest on the ground at a height allowing wheel transporters to position themselves at least partially under the front and rear bases for future transportation of the lifter,
- the front and rear bases being configured for resting on said wheel transporters during transportation of the lifter with said wheel transporters.

Preferably, the lifter exhibits at least one of the following features, and more preferably all feature in combination:
- the front base comprises at least one transverse beam, under which at least one wheel transporter is to be positioned,
- the lifter comprises spaced apart legs at ends of said at least one transverse beam between which at least one of said wheel transporters is to be positioned,
- said spaced apart legs are connected by end beams extending parallel to the main longitudinal structure,
- the front base comprises intermediate beams spaced along said at least one transverse beam between the end beams for resting on at least one of said wheel transporters during transportation the at least one lifter,
- the spaced apart legs allow two wheel transporters to stay one next to the other under the front base,
- the front base comprises at least one transverse beam, under which at least one wheel transporter is to be positioned,
- the lifter comprises spaced apart legs at ends of said at least one transverse beam between which at least one of said wheel transporters is to be positioned,
- said spaced apart legs are connected by end beams extending parallel to the main longitudinal structure,
- the rear base comprises intermediate beams spaced along said at least one transverse beam between the end beams for resting on at least one of said wheel transporters during transportation of the lifter,
- the end beams of the rear base are closer to the longitudinal axis of said main longitudinal structure than the end beams of the front base,
- the front and rear bases are connected by bracing, preferably two crossing diagonal struts,
- the front base and/or the rear base each preferably comprises two pairs of transverse beams, the beams of each pair being closer to each other than the adjacent beams of the two different pairs.

A further object of the invention is a combination of such lifter and wheel transporters used for transportation thereof.

The presence of the offshore lifter can make it possible to reduce the civil engineering. The onshore lifter(s) and/or the offshore lifter(s) can be easily transported from one industrial harbour site to another.

The invention thus makes it possible to have a heavy lifting system with lifting structures that can be brought into and out of use, and transferred by boat.

The above mentioned barge may have an adjustable ballast or a counterweight system making it possible to keep a girder carrying the lifting means located above horizontal, in particular during the partial transfer of the mechanical load onto the barge and/or the lowering of the load.

The barge may have compartments in which water is pumped in or out in order to keep the barge substantially horizontal during lifting of the load up or down into the water. During operation of the barge, water may be pumped out one compartment, for example adjacent the load, and pumped in a different compartment, for example opposite the load.

The installation may comprise at least one inclinometer carried by the load and the lifting means may be controlled so as to maintain the load substantially horizontal during lifting based on the signal delivered by the at least one inclinometer. The control of the lifting means may also be based on signals delivered by effort sensors present on the lifting means.

The installation may comprise at least one inclinometer carried by the barge and the ballast pumps may be controlled based on the signal delivered by this at least one inclinometer to maintain the barge substantially horizontal during the lifting operations.

Preferably, the lifting means are controlled together with the ballast pumps to maintain both the load and the barge horizontal during the lifting operations, from the initial lift until the immersion of the load into the water.

The control of the horizontality of the load and/or the barge may be automatic, with a possibility of manual override, for safety reasons.

The lifting means of the offshore lifter may have a cable length long enough to accommodate variations of the sea level due to tides. In this way, the load can be lifted and kept at a distance from the ground at low or hide tide. The level variation due to tide may be about 2m/h for example, while the cables of the lifting means can be raised at a speed of about 15m/h for example.

Lateral movements of the load relative to the lifters may be blocked with interfering elements once the load has reached its top position after lifting; however, the interfering elements may be configured to allow small vertical movements and tilt angle variations due to the tide in case the load is connected at at least one point to lifting means carried by a barge and at at least one another point to lifting means located onshore.

The lifting means may have cable jacks or any other lifting equipment, for example having a winch.

"Onshore" has to be understood to mean on land, or on a platform or other kind of pier constituting an advancement onto the water, the platform or other structure resting on piles for example.

"Front" has to be understood as closer to the front end than the rear end along the longitudinal axis of the main longitudinal structure of the onshore lifter. The longitudinal main structure extends in a cantilever fashion in front of the front base.

"Rear" has to be understood as closer to the rear end than the front end along the longitudinal axis of the main longitudinal structure of the onshore lifter.

The method may comprise acting on a ballast system of the barge to compensate for a variation of the force exerted by the load on the lifting means of the offshore lifter. The ballast system may thus serve to keep the barge substantially horizontal.

The invention is very particularly suitable for loading out into the water loads with a height greater than that of the lifters.

### Brief description of the drawings

The invention may be better understood from reading the following detailed description of nonlimiting exemplary embodiments thereof and from examining the appended drawing, in which:
[Fig 1] Figure 1 is a schematic view, in perspective, of an example of installation according to the invention,
[Fig 2] [Fig 3] Figures 2 and 3 illustrate the movement of the load toward its load-out position,
[Fig 4] Figure 4 illustrates the complete arrival of the load at the load-out area,
[Fig 5] Figure 5 illustrate the movement of SPMTs toward the onshore lifters,
[Fig 6] [Fig 7] [Fig 8] [Fig 9] Figures 6 to 9 are partial and schematic perspective views of an onshore lifter,
[Fig 10] [Fig 11] [Fig 12] Figures 10 to 12 illustrate the transportation of the onshore and offshore lifters toward the load using the SPMTs and the barge,
[Fig 13] Figure 13 illustrates the lifting of the load,
[Fig 14] Figure 14 illustrates the displacement of the load over the water,
[Fig 15] Figure 15 shows the load before lowering it into the water,
[Fig 16] [Fig 17] Figures 16 and 17 illustrates the lowering of the load, with gradual submersion of the load, and
[Fig 18] Figure 18 illustrates the separation of the barge from the load.

### Detailed description

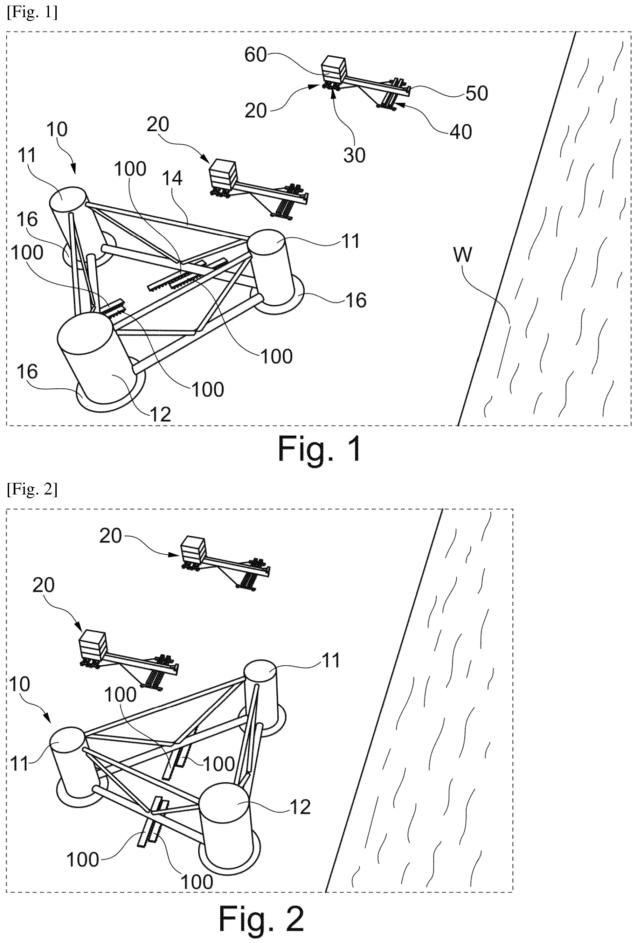

The figures 1-18 illustrate an example of a method according to the invention, for the load out into the water of a heavy load 10, constituted for example, as illustrated, by a tripod-type float for a wind turbine, having two feet 11 disposed like the two vertices at the base of an equilateral triangle, and one foot 12 disposed like the third vertex and intended to bear the tower of the wind turbine, the feet 11 and 12 being connected by a beam assembly 14.

In the example illustrated, the float is made from steel, but the invention can be applied to any type of heavy load.

At their base, the feet 11 and 12 have a collar 16 (also referred to as "flange" or "baseplate"). The foot 12 is intended to possibly carry the tower (not shown) and may have an assembly sleeve (not shown) on its upper face.

The installation comprises in this example two onshore lifters 20, but the number may be different.

Each lifter 20 has a main longitudinal structure such as a girder 21, for example of a length in the range 30 to 50m, one end of which is connected to a counterweight 60 and the other end of which bears lifting means 50.

Each onshore lifter 20 comprises a rear base 30 and a front base 40.

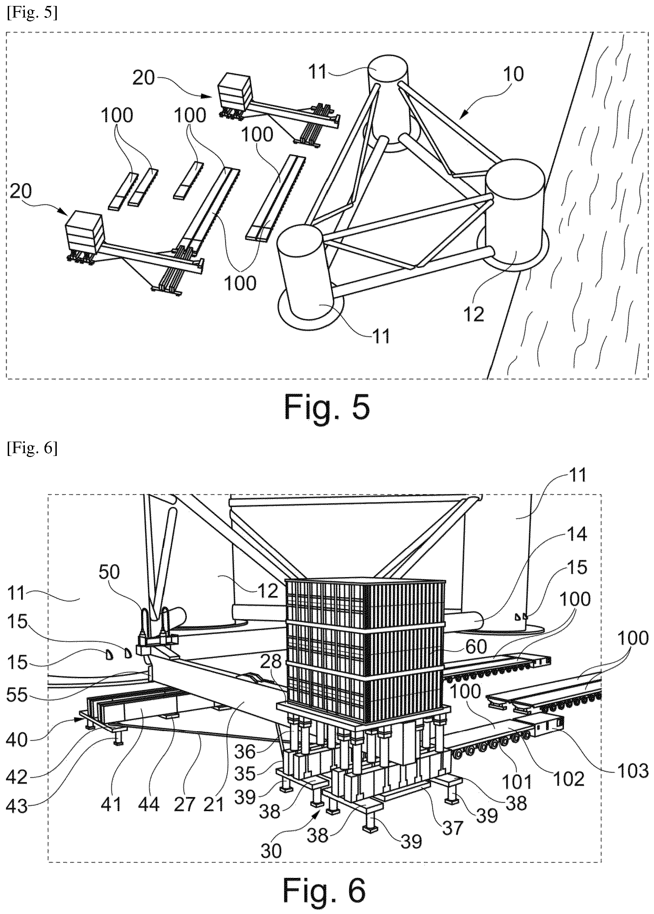

As can best be seen in figures 6 to 9 the rear base 30 comprises a deck 28 carrying the counterweight 60, the deck 28 being supported by vertical piles 36 resting on transverse beams 35, the latter being supported by end beams 38 each resting on a pair of spaced apart legs 39.

In the example shown, the piles 36 rest on two pairs of parallel transverse beams 35, these beams 35 extending perpendicularly to the longitudinal axis X of the girder 21.

The rear base 30 also comprises intermediate beams 37 fixed under the beams 35 between the end beams 38.

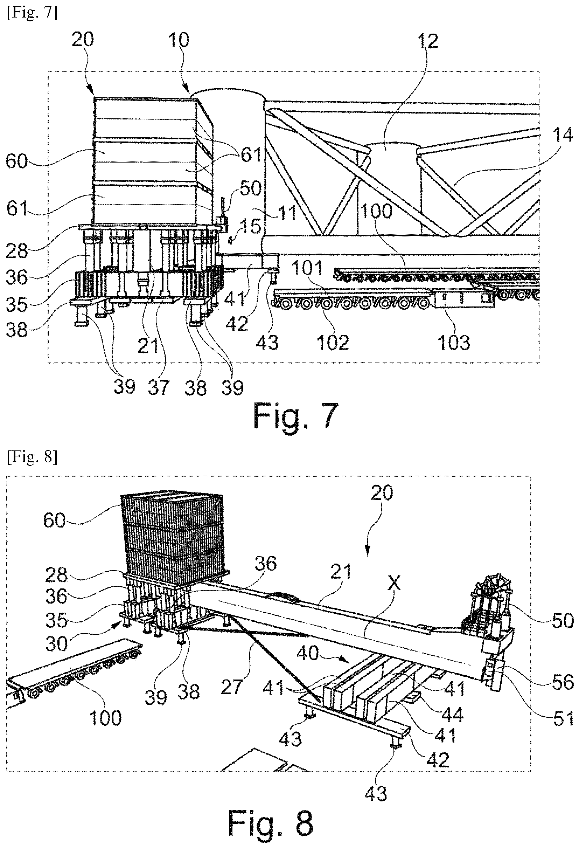

The front base 40 comprises as shown in Figure 8 two pairs of parallel transverse beams 41 on which the girder 41 rests, these beams 41 being supported by end beams 42 resting on spaced apart legs 43.

The beams 41 extend perpendicularly to the longitudinal axis X of the girder 21. The end beams 42 extend perpendicularly to the longitudinal axis of the transverse beams 41.

Intermediate beams 44 are fixed underneath the transverse beams 41 at spaced apart locations.

The rear base 30 and front base 40 are connected by bracing 27, for example in the form of two diagonal struts, as shown, each connecting one end of the end beam 38 adjacent the front base 40 with the opposite end of the end beam 42 adjacent the rear base 30.

The counterweight 60 may be in the form of a plurality of rows 61of weights 62.

Preferably, as shown in Figure 1, the weights 62 are made by maritime containers filled with some heavy material, superposed and attached together at their corners.

The installation also comprises wheel transporters 100, known per se, each being a SPMT comprising as shown a deck 101 carried by sets of multidirectional wheels 102. The height of the deck 101 can be varied hydraulically to some extent (for example in the range 0,5m to 1,5m) to enable the wheel transporter 100 to go under the end beams 38 or 42 of the rear base or front base and then lift them.

Each wheel transporter 100 comprises a control and power unit 103 at one end.

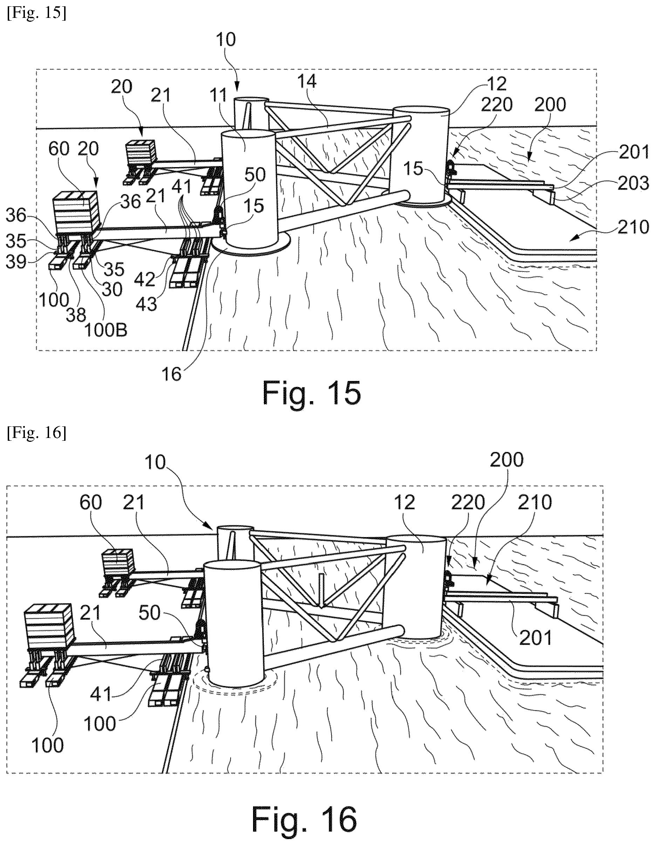

The installation also comprises an offshore lifter 200, as shown in Figure 15.

The offshore lifter 200 comprises in this example a barge 210, carrying at least one girder 201 provided at one end with hoisting means 220. This girder 201 is carried by two end piles 203 resting on the barge 210. The girder 201 extends in cantilever fashion at the side of the barge 210.

The barge 210 comprises a ballast system 208 configured to control its level and inclination relative to the sea level. The ballast system 208 may comprise rows of reservoirs whose filling or emptying is controllable.

The offshore lifter 200 may be provided with shock absorbers to absorb possible impacts due to horizontal movements between the load and the lifter and facilitate lowering thereof.

### Method of operation

The method according to the invention comprises bringing the load 10, initially present entirely onshore, close to the load out area as illustrated by figures 1 to 4.

For this, wheel transporters 100 are positioned under the load 10, for example under the beam assembly 14 and one of the feet 11, to transport the load 10 on the platform, from an assembly or delivery site to near the water W.

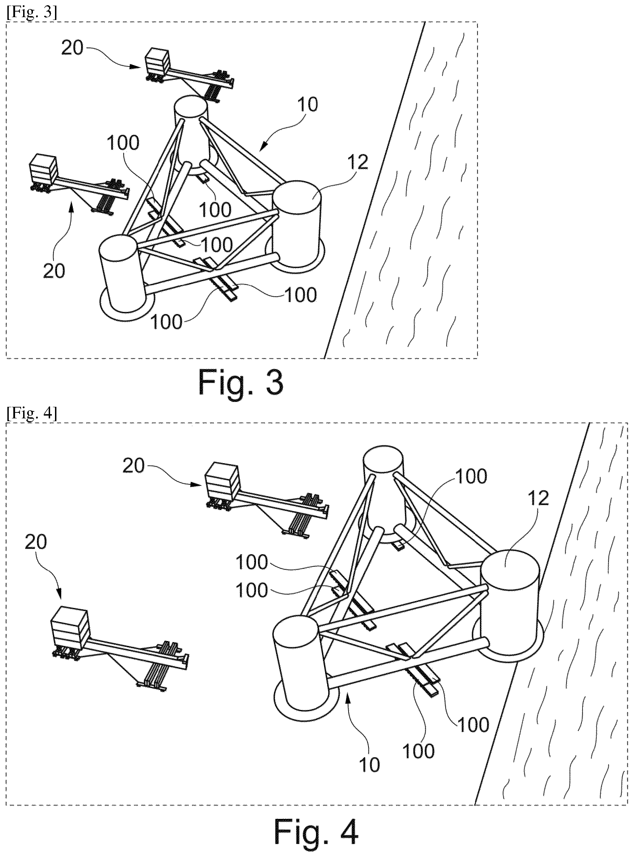

Once the load 10 has arrived close to the load-out area, as shown in Figure 4, the load 10 is left resting on supports (not shown) such as concrete blocks or any other appropriate spacers, to enable the wheel transporters 100 to be removed from under it.

Then, the same wheel transporters 100 are re-used for transporting the onshore lifters 20 close to the load 10, as illustrated by figures 5 to 11.

The wheel transporters 100 are accordingly driven under the rear base 30 and front base 40. The spacing between the legs 39 connected by the end beams 38 is larger than the width of a wheel transporter, and the end beams 38 and intermediate beams 37 are at a height relative to the platform that is chosen so that the wheel transporter 100 can engage underneath and then, by raising the deck 101, lift the rear base 30.

In the example under consideration, two wheel transporters 100 are positioned respectively under each set of end beams 38 and intermediate beams 37 extending under a pair of transverse beams 35.

The distance between the lugs 43 connected by end beams 42 of the front base 40 is enough to enable two side by side wheel transporters 100 to be positioned underneath, and by raising their deck 101, to lift the front base 40.

Intermediate beams 44 together with end beams 42 distribute the mechanical load along the wheel transporter 100.

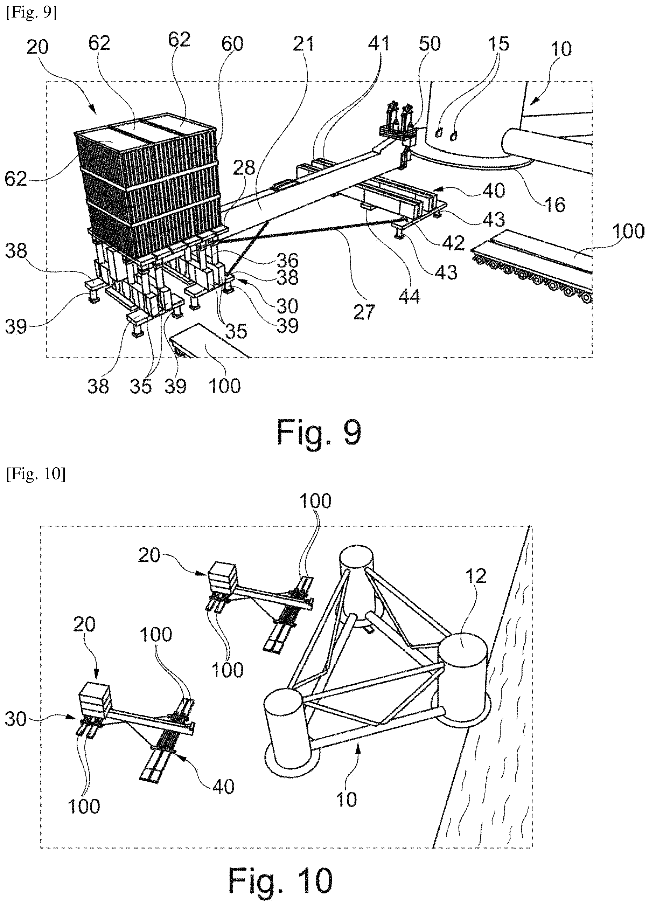

As shown in Figure 10, the wheel transporters 100 positioned under the front base 40 may be longer than those positioned under the rear base 30, the transverse beams 41 being longer than the transverse beams 35. The length of the transverse beams 41 may range from 15 to 25m and the length of the transverse beams 35 may range from 7 to 15m.

Once the lifters 20 have been brought close to the load 10, the lifting means 50 thereof can be connected to the load 10.

For this purpose, the feet 11 and 12 may comprise, as shown, lugs 15 allowing connection to the lifting means 50. Each lifter 20 may comprise shock absorbers 56 for dampening the contact of the lifter 20 against the load 10. In a variant, the load 10 is provided with such shock absorbers.

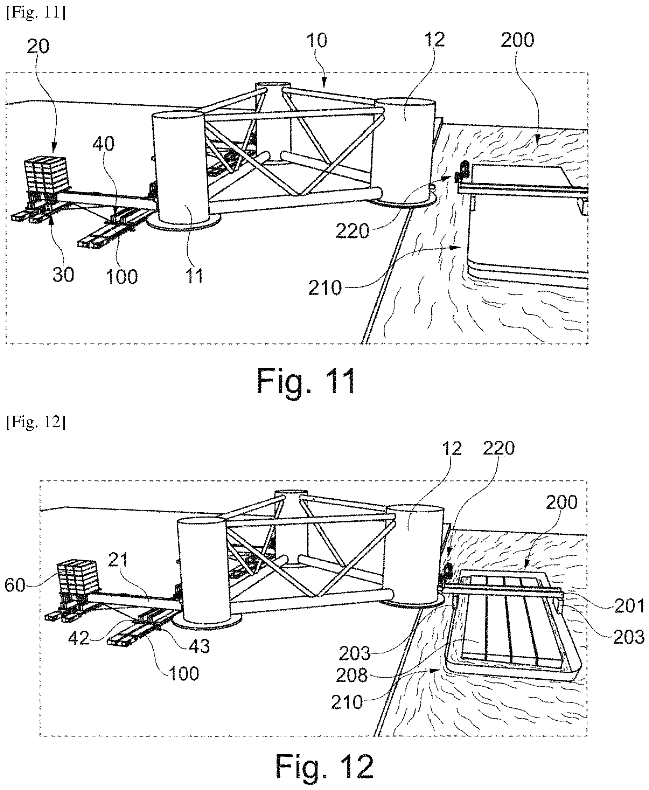

The offshore lifter 200 is approached to the load 10, as shown in Figure 11, then the lifting means 220 are connected to the foot 12, as shown in Figure 12.

The girder 201 borne by the barge 210 projects beyond it toward the load 10 to enable the lifting means 220 to be attached to the lugs 15 at the base of the foot 12.

In this example, the barge 210 is oriented with its longitudinal axis substantially parallel to the edge of the dock, and substantially perpendicular to the girders 21.

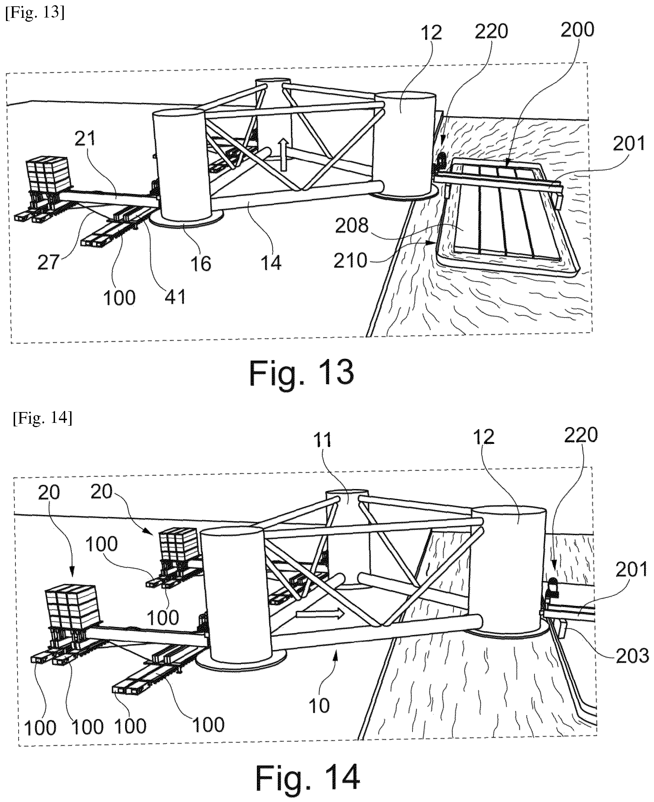

The lifting means 50 and 220 may each have at least one cable jack assembly provided at one end with a yoke 51 bearing a shaft that can be engaged in an opening of the lugs 15. The load 10 is then raised by activating the lifting means 50 of the onshore lifters 20 and the lifting means 220 of the offshore lifter 200, as illustrated in Figure 13.

During this operation, the ballast system 208 is controlled to compensate for the variation in weight the lifting means 220 supports, to keep the barge 210 substantially horizontal.

The load 10 once lifted is then transported to the load-out area over water by driving the onshore lifters 20 with the wheel transporters 100 present underneath.

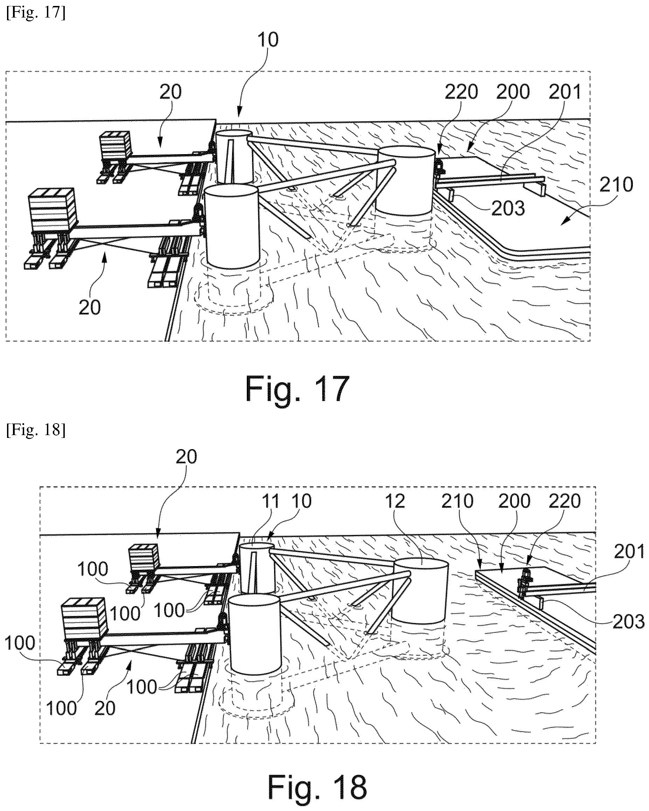

Once the load 10 has arrived at the load-out area as shown in Figure 15, the lifting means 50 of the onshore lifters 20 and the lifting means 220 of the offshore lifter 200 are operated to lower the load 10 progressively into water, as illustrated on figures 16 and 17.

Once the load is immerged, and floating, the offshore lifter 200 can be separated from the load and moved away, as shown in Figure 18.

Once the load 10 has moved away from the load-out area, it is possible to move the onshore lifters 20 in reverse so as to take up the next load 10.

Once the lifters 20 have been brought to a parking area, the same wheel transporters 100 as used for transporting them may be used to bring a next load close to the load-out area.

Needless to say, the invention is not limited to the example that has just been described.

The lifting means 50 and 220 may be realized in a different way than with cable (strands) jacks, for example with other jacks or with winches. The load 10 may be different, for example of tetrapod type, and be made from metal or of other materials. The invention thus makes it possible to take up a metal jacket of any shape, but also other concrete structures with or without a very tall metal tower, with or without its generator (wind turbine nacelle, rotor and blades).

The wind turbine tower does not have to be carried by a floating foot. It may be carried by a central base, carried by a latticework structure connected to feet/floats, or by a fourth foot/float in the center.

In a variant, the ballast system 208 of the barge 210 is replaced and/or supplemented by a counterweight system that is movable on the barge from the front to the rear and vice versa. In the figures, the lifting means are attached to the load by way of lifting lugs; as a variant, the attachment is performed in a different way, for example by way of lifting lugs attached to the foot in another way, or by any suitable disposition.

Where appropriate, the offshore lifter 200 may interact with a support system fixed underwater.

The barge 210 and load 10 may be equipped with sensors such as inclinometers and effort gauges and the installation may comprise at least one automate to control based on signals received from these sensors the pumps of the barge 210 and lifting means 220 as well as counterweights positions to maintain the barge 210 and the load 10 horizontal. The at least one automate may allow manual override.

The cable length of the lifting means 220 may be long enough to guarantee that the load can be lifted whatever variations of the sea level due to the tide and the cable speed when the load is lifted or brought down is greater than the speed of variation of the sea level due to the tide; for example, the cable speed is about 15 m/h while the variation of the sea level due to the tide is about 2 m/h.

## Claims

1. Method for the load-out into water of a heavy load (10), comprising:
a) providing at least one onshore lifter (20) comprising:
- a main longitudinal structure (21),
- lifting means (50) at the front of said main longitudinal structure (21),
- a counterweight (60) at the rear of said main longitudinal structure (21),
- front (40) and rear (30) bases respectively at the front and the rear of said main longitudinal structure (21),
- legs (39, 43) allowing the lifter (20) to rest on the ground at a height allowing wheel transporters (100) to position themselves at least partially under the front and rear bases for future transportation of the lifter,
- the front (40) and rear (30) bases being configured for resting on said wheel transporters (100) during transportation of the lifter with said wheel transporters (100),
b) providing at least one offshore lifter (200) comprising lifting means (220),
c) using wheel transporters (100) for approaching the at least one onshore lifter (20) close to the load (10),
d) connecting the lifting means (50) of the at least one onshore lifter (20) and of the at least one offshore lifter (200) to the load (10),
e) moving the at least one onshore lifter (20) using wheel transporters (100) and the at least one offshore lifter (200) to transport the load (10) from an onshore area over the water in a load-out area while hoisting it,
f) lowering the load into water.

2. Method according to claim 1, comprising bringing the load (10) close to the load-out area using wheel transporters (100).

3. Method according to claim 2, at least one same wheel transporter (100) being used for transporting the load onshore close to load-out area and then being moved away from under the load (10) and again used at steps c) and e) for transporting the at least one onshore lifter (20).

4. Method according to any one of claims 1 to 3, the front base (40) comprising at least one transverse beam (41), under which at least one wheel transporter (100) is positioned during steps c) and e).

5. Method according to claim 4, the at least one onshore lifter (20) comprising spaced apart legs (43) at ends of said at least one transverse beam (41) between which at least one of said wheel transporters (100) is to be positioned, said spaced apart legs (43) being preferably connected by end beams (42) extending parallel to the main longitudinal structure (21), the front base (40) preferably comprising intermediate beams (44) spaced along said at least one transverse beam (41) between the end beams (42) for resting on at least one of said wheel transporters (100) during transportation the at least one lifter (20).

6. Method according to claim 5, the spaced apart legs (43) allowing two wheel transporters (100) to stay one next to the other under the front base (40) at least during step e).

7. Method according to any one of claims 1 to 6, the front base (40) comprising at least one transverse beam (35), under which at least one wheel transporter (100) is positioned during steps c) and e).

8. Method according to claim 7, the at least one onshore lifter (20) comprising spaced apart legs (43) at ends of said at least one transverse beam (35) between which at least one of said wheel transporters (100) is to be positioned, said spaced apart legs (39) preferably being connected by end beams (38) extending parallel to the main longitudinal structure (21), the rear base (30) preferably comprising intermediate beams (37) spaced along said at least one transverse beam (35) between the end beams (38) for resting on at least one of said wheel transporters (100) during transportation the at least one lifter (20).

9. Method according to claims 5 and 8, the end beams (38) of the rear base (30) being closer to the longitudinal axis (X) of said main longitudinal structure (21) than the end beams (42) of the front base (40).

10. Method according to any one of claims 1 to 9, the front (40) and rear (30) bases being connected by bracing (27), preferably two crossing diagonal struts.

11. Method according to any one of claims 1 to 10, the front base (40) and/or the rear base (30) each comprising two pairs of transverse beams (41; 35), the beams of each pair being closer to each other than the adjacent beams of the two different pairs.

12. Method according to any one of claims 1 to 11, the load (10) being a tripod or a quadripod.

13. Method according to any one of claims 1 to 12, the offshore lifter (200) comprising a barge (210) having a ballast system (208) for varying the height and inclination of said barge relative to the water level, the method comprising controlling the ballast system (208) during lifting and/or lowering of the load into water.

14. Method according to any one of claims 1 to 13, the wheel transporters (100) being SPMTs

15. A lifter (20) for carrying a load, in particular for being used in a method as defined in the preceding claims, comprising
- A main longitudinal structure (21),
- lifting means (50) at the front of said main longitudinal structure (21),
- a counterweight (60) at the rear of said main longitudinal structure,
- front (40) and rear (30) bases respectively at the front and the rear of said main longitudinal structure (21),
- legs (43, 39) allowing the lifter to rest on the ground at a height allowing wheel transporters (100) to position themselves at least partially under the front and rear bases for future transportation of the lifter (20),
- the front (40) and rear (30) bases being configured for resting on said wheel transporters (100) during transportation of the lifter (20) with said wheel transporters (100).

16. The lifter (20) of claim 15, wherein:
- the front base (40) comprises at least one transverse beam (41), under which at least one wheel transporter (100) is positioned during steps c) and e),
- the lifter (20) comprises spaced apart legs (43) at ends of said at least one transverse beam (41) between which at least one of said wheel transporters (100) is to be positioned,
- said spaced apart legs (43) are connected by end beams (42) extending parallel to the main longitudinal structure (21),
- the front base (40) comprises intermediate beams (44) spaced along said at least one transverse beam (41) between the end beams (42) for resting on at least one of said wheel transporters (100) during transportation the at least one lifter (20),
- the spaced apart legs (43) allow two wheel transporters (100) to stay one next to the other under the front base (40),
- the front base (40) comprises at least one transverse beam (35), under which at least one wheel transporter (100) is to be positioned,
- the lifter (20) comprises spaced apart legs (43) at ends of said at least one transverse beam (35) between which at least one of said wheel transporters (100) is to be positioned,
- said spaced apart legs (39) are connected by end beams (38) extending parallel to the main longitudinal structure (21),
- the rear base (30) comprises intermediate beams (37) spaced along said at least one transverse beam (35) between the end beams (38) for resting on at least one of said wheel transporters (100) during transportation of the lifter (20),
- the end beams (38) of the rear base (30) are preferably closer to the longitudinal axis (X) of said main longitudinal structure (21) than the end beams (42) of the front base (40),
- the front (40) and rear (30) bases are connected by bracing (27), preferably two crossing diagonal struts,
- the front base (40) and/or the rear base (30) each preferably comprises two pairs of transverse beams (41; 35), the beams of each pair being closer to each other than the adjacent beams of the two different pairs.
